# EUROPÄISCHE PATENTSCHRIFT

(11) **EP 1 691 914 B1**
(45) Veröffentlichungstag und Bekanntmachung des Hinweises auf die Patenterteilung: **04.04.2007**
(21) Anmeldenummer: 04803378.1
(22) Anmeldetag: 01.12.2004
(51) Int. Cl.: B01D 63/04, B01D 65/02, B01D 65/08

(54) **MEMBRANFILTERANLAGE MIT PARALLEL DURCHSTRÖMBAREN FILTERMODULEN**
MEMBRANE FILTER SYSTEM COMPRISING PARALLEL CROSS-FLOW FILTER MODULES
DISPOSITIF DE FILTRE A MEMBRANE COMPORTANT DES MODULES DE FILTRE POUVANT ETRE PARCOURUS PARALLELEMENT

(30) Priorität: 09.12.2003 AT 19652003
(43) Veröffentlichungstag der Anmeldung: 23.08.2006
(73) Patentinhaber: VA TECH WABAG GmbH, 1211 Wien (AT)
(72) Erfinder: FUCHS, Werner, A-1070 Wien (AT); LUKASCHEK, Christoph, A-2331 Vösendorf (AT); VRANITZKY, Robert, A-1190 Wien (AT)
(74) Vertreter: VA TECH Patente GmbH & Co
(86) Internationale Anmeldenummer: PCT/EP2004/013602
(87) Internationale Veröffentlichungsnummer: WO 2005/058464

(56) Entgegenhaltungen:
- WO-A-00/20104
- US-A- 4 876 006
- PATENT ABSTRACTS OF JAPAN Bd. 012, Nr. 050 (C-476), 16. Februar 1988 (1988-02-16) & JP 62 197106 A (JAPAN ORGANO CO LTD), 31. August 1987 (1987-08-31)
- PATENT ABSTRACTS OF JAPAN Bd. 2003, Nr. 09, 3. September 2003 (2003-09-03) & JP 2003 144863 A (KURITA WATER IND LTD), 20. Mai 2003 (2003-05-20)

## Beschreibung

Die Erfindung betrifft eine Membranfilteranlage gemäß dem Oberbegriff von Anspruch 1 sowie ein Verfahren zum Betreiben und zum Reinigen einer Membranfilteranlage.

Aus der WO 02/26363 der Anmelderin ist eine Membranfilteranlage mit einem Filtermodul bekannt, vor welchem eine durchströmbare Begasungseinheit angeordnet ist, wobei zu reinigende Suspension dem Fitrationsmodul durch ein Strömungsrohr zugeführt wird. Für den Betrieb mehrerer solcher Filtermodule parallel zueinander ist, siehe etwa die JP 2002-210336 A (Toray Ind Inc), eine entsprechende Verrohrung der einzelnen Filtermodule nötig, etwa um Retentat oder gewonnenes Permeat aus den einzelnen Filtermodulen abzuziehen, oder die zu filternde Suspension zuzuführen. Diese Verrohrung hat den Nachteil, dass sie viel Platz beansprucht und daher der Anzahl von Filtermodulen für eine bestimmte Fläche Grenzen gesetzt sind.

Es ist daher eine Aufgabe der Erfindung, eine Membranfilteranlage anzugeben, bei welcher die Nachteile bekannter Vorrichtungen vermieden werden, insbesondere eine dichtere Anordnung von Filtermodulen ermöglicht wird.

Diese Aufgabe wird durch eine Membranfilteranlage gemäß Anspruch 1 gelöst.

Dadurch, dass zum Abzug des Permeats und/oder des Retentats und/oder zur Zuführung von zu filternder Suspension (Feed) keine Verrohrung notwendig ist, da das Permeat ohne Verrohrung in den Zwischenraum der Filtermodule austritt und von dort abgesaugt wird und/oder Feed aus einem Feedraum direkt zu den Filtermodulen gepumpt wird und/oder Retentat direkt aus den Filtermodulen in einen Retentatraum austritt, können die Filtermodule enger zusammengerückt werden.

Als Membraneinheiten kommen insbesondere Membranrohre, Kissenmembranen, Hohlfasermembranen oder Plattenmembranen in Frage.

Um eine einfache Zuleitung der zu filternden Suspension zu den Filtermodulen zu erhalten, kann vorgesehen sein, dass ein Feedraum ausgebildet ist, der zumindest die einlaufseitigen Stirnflächen aller Filtermodule umspannt und mit den einzelnen Filtermodulen zum Zuleiten von zu filternder Suspension verbunden ist.

Um eine einfache Ableitung des Retentats zu erhalten, kann vorgesehen sein, dass ein Retentatraum ausgebildet ist, der zumindest die ablaufseitigen Stirnflächen aller Filtermodule umspannt und mit den einzelnen Filtermodulen zum Ableiten von Retentat verbunden ist.

Der Feedraum soll gleichmäßig mit Suspension beschickt werden, was dadurch erreicht werden kann, dass dem Feedraum eine der Strömungsberuhigung dienende Vorkammer (Feedverteilraum) vorgelagert ist, welche zumindest teilweise um den Feedraum geführt ist, wobei entlang des Feedraums zu filternde Suspension von der Zuleitung in den Feedraum eindringen kann. Dies kann durch eine in Umfangsrichtung des Feedraums durchgehende Feedverteilöffnung im unteren Bereich des Feedraums erreicht werden.

Im Falle einer trockenen Anordnung der Membranfilteranlage soll das Retentat aus dem Retentatraum gleichmäßig abgezogen werden, was dadurch erreicht werden kann, dass der Retentatraum zumindest eine Ableitung besitzt.

Wird die Membranfilteranlage direkt in die zu filtrierende Suspension platziert, ist kein Retentatraum erforderlich. Das Retentat vermischt sich nach Verlassen der Filtermodule mit der sie umgebenden Suspension.

Um eine turbulente Strömung in den Membraneinheiten, z.B. Membranrohren, zu erzeugen, können im Feedraum Belüftungselemente angeordnet werden, die die zu filtrierende Suspension vor Eintritt in die Filtermodule mit Gasblasen anreichern.

Um abgelagerte Störstoffe aus dem Feedraum der Membranfilteranlage entfernen zu können, ist es vorteilhaft, wenn eine Abzugseinrichtung vorgesehen ist, z.B. ein Abzugsrohr im Feedverteilraum.

Durch die Erfindung kann ein weitgehend uneingeschränkter Betrieb sowie eine optimale Filtrationsleistung und ein hoher Wirkungsgrad der Filteranlage gewährleistet werden.

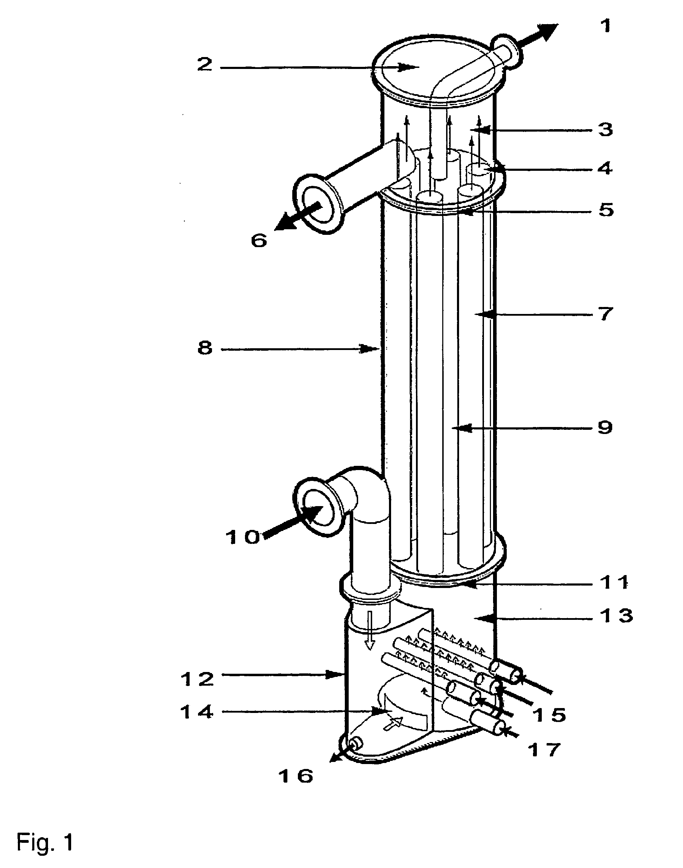

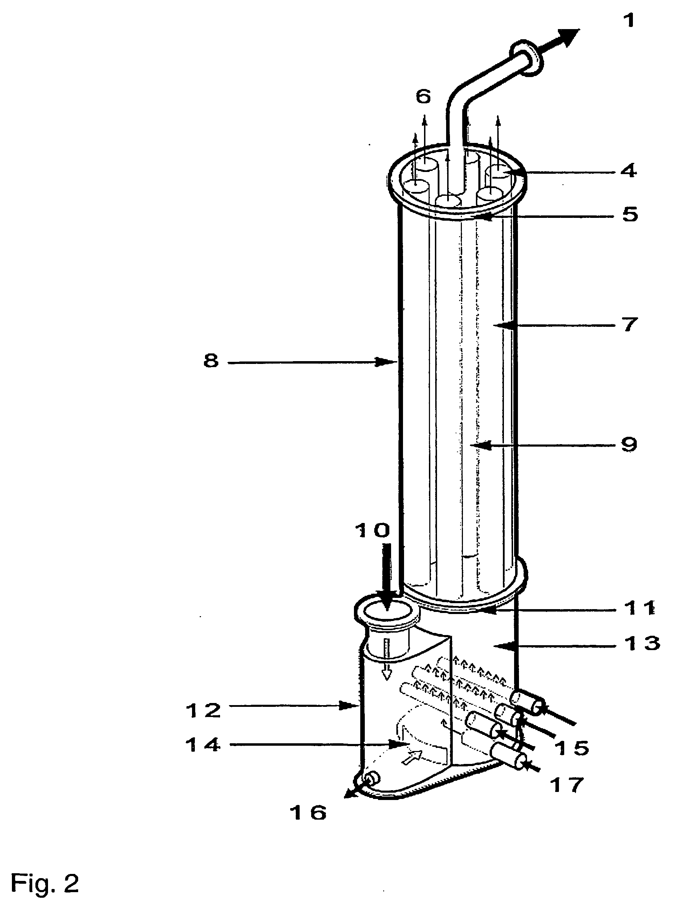

Die Erfindung wird anhand der angeschlossenen Figuren 1 und 2, die eine erfindungsgemäße Membranfilteranlage beispielhaft und schematisch darstellen, und der folgenden Beschreibungen erläutert. Es zeigen
Fig. 1 eine Membranfilteranlage mit Retentatraum (zur trockenen Aufstellung),
Fig. 2 eine Membranfilteranlage ohne Retentatraum (zur getauchten Aufstellung).

In Fig. 1 ist zu sehen, dass die in Strömungsrichtung durchströmten Filtermodule 7 parallel und vertikal im gegenüber der Feedseite abgedichteten Permeatraum 9 angeordnet sind. Dieser abgedichtete Permeatraum 9 bildet innen einen gemeinsamen Permeatraum für die Filtermodule 7, der über eine Permeatleitung 1 mit einer Permeatsaugpumpe bzw. mit einer Permeatrückspülleitung verbunden ist. Nach außen, zur zu filtrierenden Suspension hin, kommuniziert der Permeatraum 9 lediglich über die Membranfläche der Filtermodule 7.

Zur gleichmäßigen Anspeisung einer großen Anzahl an parallel geschalteten Filtermodulen 7 mit der zu filtrierenden Suspension ist eine möglichst laminare Anströmung notwendig. Eine Verteilkammer (Feedverteilraum) 12 , die die zu filtrierende Suspension durch eine in Bodennähe angeordneten Feedverteilöffnung14 in den Feedraum 13 leitet, soll die gleichmäßige Anströmung aller Filtermodule 7 ermöglichen.

Die für die Filtration vorteilhafte Begasung wird über im Feedraum 13 platzierte Belüftungselemente 15 unterhalb der Filtermodule erreicht. Es können hierzu die dargestellten Belüftungsrohre verwendet werden, aber auch andere Belüftungselemente sind möglich.

Zur Gewährleistung einer gleichmäßigen Verteilung von Gas und Suspension über alle Membranröhrchen der Filtermodule 7 muss die zur filtrierende Suspension mit der Gasphase so vermischt werden, dass eine optimale Verteilung über den gesamte Strömungsrohrquerschnitt des Membranmoduls 8 sichergestellt ist, wodurch in jedem Filtermodul 7 eine ausreichende und gleiche Turbulenz realisiert wird. Durch die Begasung wird der sogenannte Mammutpumpeneffekt verursacht, der die Zwangsüberströmung unterstützt und damit Energiekosten einspart. Die Belüftungselemente 15 sollten in dem zu belüftenden Medium eine mittelblasige Begasung produzieren. So sollte beispielsweise für ein Filtrationsmodul 7 mit tubulären Rohrmembranen mit einem Durchmesser von 5 mm eine Blasengröße von ca. 5 mm angestrebt werden. Ein beispielhafter Einsatz eines Filtermodules 7 könnte ein tubuläres Rohrmodul mit einem Durchmesser von 20 cm und einer Länge von 3 m sein. Etwa 600 Rohrmembranen mit dem Durchmesser von 5 mm sind in einer Druckhülle mittel Harz an Kopf und Fußteil eingegossen. Feedraum 13 und Permeatraum 9 sind damit druckdicht von einander getrennt. Über den Permeatraum 9 sind alle Membranrohre miteinander kommunizierend verbunden. Über Öffnungen in der Druckhülle des Filtermodules 7 kann Permeat aus dem Permeatraum 9 abgezogen bzw. zurückgespült werden.

Nach Durchströmen der Membranen gelangt das Retentat in einen Retentatraum 3. Dieser umspannt den Kopf der Membranfilteranlage und ist mit dem Retentatdeckel 2 abgeschlossen. An einer möglichst tiefen Stelle des Feedverteilraums 12ist ein Abzugsrohr 16 zur Entleerung der Membranfilteranlage vorgesehen. Das Abzugsrohr 16 könnte aber auch in Feedraum 13 vorgesehen werden.

Nur durch vollkommen homogene Beaufschlagung der Feedseite der Membranmodule kann eine längerfristige sichere Betriebsweise sichergestellt werden. Filtrationsmodule welche mit Crossflow-Strömung (Schlamm und/oder Luft) unterversorgt werden, neigen zu übermäßigem Filterkuchenaufbau an der Membranoberfläche. Dieser Filterkuchen kann im schlimmsten Fall Membranröhrchen vollständig verlegen - die Folge ist ein irreversibler Verlust an Membranfläche.

### Störstoffabzug:

In Filteranlagen treten oftmals Betriebsstörungen mit Verzopfungen durch Haare, Fasern oder andere Störstoffe auf. Durch die Crossflow Strömungen lagern sich diese Verzopfungen an den Stellen mit der geringsten Durchgangsweite ab. Da dies in der Mehrzahl der Anlagenkonfigurationen der Feedkanal der Filtermodule 7 darstellt, kommt es dort zu einer Akkumulation der Störstoffe. Ausgelöst durch Turbulenzen bauen sich immer größere Konglomerate auf., Das kontrollierte Ablassen der Suspension aus der gesamten Membranfilteranlage bei gleichzeitigem Rückspülen kann hier eine sichere Abhilfe schaffen, da die Störstoffkonglomerate so aus der Membranfilteranlage ausgetragen werden. Bei Suspensionen mit hohem Störstoffanteil ist es vorteilhaft, die aus dem Abzugsrohr 16 abgezogene Suspension über ein externes Sieb von Störstoffen zu befreien und im Anschluss daran wieder in den Filtrationskreislauf zurückzuführen.

### Getauchte Variante der Membranfilteranlage:

Die gesamte Membranfilteranlage kann im Trockenen, also außerhalb eines Filtrationsbeckens angeordnet werden. Wie in Figur 2 dargestellt ist jedoch auch, da die Membranfilteranlage ja nach außen abgeschlossen ist, eine getauchte Variante möglich. Die Feedpumpe kann in diesem Fall direkt aus dem Suspensionsbehälter in den Feedverteilraum 12 fördern. Der Retentatraum 3 ist in der getauchten Ausführung eigentlich obsolet. Das Retentat vermischt sich nach Verlassen der Filtermodule mit der Suspension. Lediglich im Falle von chemischen Reinigungen unter Ausschluss von Suspension (siehe Chemische Reinigung) kann ein absperrbarer Retentatraum3 notwenig werden. Eine andere Möglichkeit zur hydraulischen Trennung von Suspensionsbehälter und Retentatraum ist ein Absenken des Suspensionsbehälterniveaus. Dies kann durch geringfügiges Einengen der Suspension mittels der Filtrationseinheit erreicht werden.

Mehrere Membranfilteranlagen können nebeneinander ohne Verbindung angeordnet werden oder auch miteinander verschaltet werden, indem diese etwa einen gemeinsamen Permeatpuffertank aufweisen.

### Wartung der Filtermodule:

In größeren Zeitabständen ist der Austausch bzw. die Wartung der Filtermodule 7 notwendig. Zu diesem Zweck sind der Feedraum 13 und der Retentatraum 3 über Flansch 5 und Flansch 11 mit dem Membranteil verbunden. Durch Öffnen dieser Verbindungen kann der Membranmodul 8 gewartet bzw. getauscht werden.

### Produktionsphase:

Bei der Filtration produzieren eine nicht dargestellte Suspensionspumpe und ein nicht dargestelltes Gebläse (über die Belüftungseinrichtung 15) eine Crossflow-Strömung über die Membranoberfläche in den Filtermodulen 7, um den Deckschichtaufbau durch Filterkuchen zu kontrollieren. Eine Permeatsaugpumpe fördert das Permeat durch die Membran in einen Permeatpuffertank. Dieser Produktionsstatus wird entweder in festgelegten periodischen Zeitabschnitten, oder durch die Überschreitung von festgelegten Transmembrandrucklimits durch Reinigungsmaßnahmen unterbrochen.

### Rückspül- und Reinigungsphase:

Zur Reinigung der Membranfilteranlage sind mehrere Verfahren mit unterschiedlichen Vorzügen möglich.

Ein erstes sehr einfach durchführbares Verfahren ist dadurch gekennzeichnet, dass zur Reinigung der Membranfilteranlage in periodischen Zeitabständen Permeat gegen die Produktionsrichtung durch die Permeatleitung 1 und die Membranoberfläche rückgespült wird.

In Verbindung mit der Begasungseinheit kann ein weiteres sehr vorteilhaftes Reinigungsverfahren umgesetzt werden, indem zur Reinigung der Membranfilteranlage zumindest ein getakteter Luftstoß durch das Druckrohr (Luftpulsleitung)17 in die Filtermodule 1 eingebracht wird und eventuell gleichzeitig bereits gewonnenes Permeat gegen die Produktionsrichtung durch die Permeatleitung 1 und die Membranoberfläche rückgespült wird. Damit erreicht man eine ganz besonders gründliche Spülung der Membranrohre.

Ganz besonders vorteilhaft lassen sich die Vorzüge der einzelnen Verfahren verbinden, indem zur Reinigung der Membranfilteranlage eine Kombination verschiedener Reinigungsverfahren verwendet wird.

Bei dem im folgenden beschriebenen Verfahren zur Entfernung von Störstoffen wird die Absperrvorrichtung im Abzugsrohr 16 geöffnet und eine Abzugspumpe in Gang gesetzt. Eine vorteilhafte Entfernung der Störstoffe ergiebt sich dann, wenn die Suspensionspumpe während der Abzugsphase nicht läuft. Dadurch können auch Partikel, welche sonst durch den Anpressdruck der Suspensionsströmung an der Einlassöffnungen der Filtermodule 7 haften blieben, aus dem Feedraum 13 abgezogen werden. Ein Verfahren zur besonders effizienten Störstoffentfernung ergibt sich durch gleichzeitiges Rückspülen der Filtermodule 7. Permeat fließt durch die Gravitation getrieben in den Feedräumen der Filtermodule 7 in den Feedraum 13 und reinigt eventuelle Störstoffe zusätzlich ab.

Eine andere Form der Reinigung, die chemische Reinigung, der Membran in der Membranfilteranlage ist besonders effizient wenn sie unter Ausschluss der zu filtrierenden Suspension stattfindet. Hierzu werden die Absperrvorrichtungen des Zuleitungskanals 10 und die Absperrvorrichtung des Abzugkanals 6 verschlossen und die zu filtrierende Suspension mittels einer Pumpe und einem in Bodennähe angeordneten Abzugsrohr 16 aus dem Feedraum 13 der Membranfilteranlage entfernt. Ein Spülschritt, der durch das Rückspülen von Permeat durch die Permeatleitung 1 eingeleitet wird, und durch die kontinuierliche Begasung (Druckrohr und Belüftungseinrichtung 15) mit der Filtrationsluft besonders vorteilhaft abläuft, sorgt für eine erste Vorreinigung der Membranoberfläche. Das verunreinigte Spülwasser muss abgepumpt werden. Anschließend wird die Membranfilteranlage erneut befüllt, wobei dem rückgespülten Permeat mit einer Dosierpumpe eine oder mehrere chemische Reinigungslösungen zugesetzt wird. Durch das Belüften mit Filtrationsluft und das Einhalten einer gewissen Reaktionszeit und Reaktionstemperatur wird eine effiziente Regeneration der Membran erreicht.

Mit den verschiedenen Verfahrenstechniken wie der Permeatrückspülung oder der Luftpulsung in den Feedraum 13 oder auch die Feedleitung (= das die Suspension zuführendes Strömungsrohr) kann eine Verstopfung der Membranrohre verhindert werden. Generell gilt jedoch, je gleichmäßiger die Versorgung der parallelen Filtermodule mit Feedschlamm und Filtrationsluft, desto stabiler der Prozess.

### Begasung mit Spülluft:

Die notwendige turbulente Strömung wird erfindungsgemäß durch eine Umwälzpumpe (Suspensionspumpe) erzeugt, die die zu filtrierende Suspension durch die Filtermodule 7 pumpt, und zusätzlich durch die Begasung erhöht, was sich auf die Wirtschaftlichkeit einer solchen Membranfilteranlage auswirkt, da dadurch der benötigte Energieeintrag der Umwälzpumpe verringert wird, wobei Gas kurz vor dem Eingang des Filtermoduls in die Suspension eingetragen wird. Als zusätzlichen Effekt kann durch das Einblasen der Luft in den Feedkanal aufgrund der feinen Bläschenform und der hohen Turbulenz in den Membranrohren eine Anreicherung der zu filtrierenden Suspension mit Sauerstoff erreicht werden, so kann im Fall von Belebtschlamm ein Teil der für die Kohlenstoff- bzw. Stickstoffatmung ohnehin benötigte Sauerstoffmenge bereits durch die Filtration aufgebracht werden.

Das Verfahren sieht vor, dass die Suspension so begast wird, dass der Druckunterschied Δ*p* zwischen Eintritt und Austritt des Filtermoduls, nach Berücksichtigung des hydrostatischen Druckes der Flüssigkeitssäule der Suspension im Filtermodul, reduziert oder gleich Null wird. Dadurch ist es möglich, die Strömung in den Membranrohren so einzustellen, das ein idealer oder zumindest verbesserter Druckverlauf in den Membranrohren erzielt wird, was sowohl den Wirkungsgrad als auch die Produktionssicherheit erhöht. Das Prinzip des Verfahrens wurde bereits in der WO 02/26363 erläutert.

### Membranfiltrationsmodule:

Prinzipiell sind alle Filtermodule mit "Inside-Outside Filtration" (die zu filtrierende Flüssigkeit fließt durch einen definierten Feedkanal, der von einer Membran umgeben ist) wie zum Beispiel Rohrmodule oder Kissenmodule in der beschriebenen Membranfilteranlage einsetzbar. Ein beispielhafter Einsatz eines Filtermodules könnte wie erwähnt ein tubuläres Rohrmodul mit einem Durchmesser von 20 cm und einer Länge von 3 m sein. Etwa 600 Rohrmembranen mit dem Durchmesser von ca. 5 mm sind in einer Druckhülle mittel Harz an Kopf und Fußteil eingegossen. Feed- und Permeatraum sind damit druckdicht von einander getrennt. Über Permeatraum sind alle Membranrohre miteinander kommunizierend verbunden. Über Öffnungen in der Druckhülle kann Permeat aus dem Permeatraum abgezogen bzw. zurückgespült werden.

Die Druckhülle von Rohrmodulen ist für die Verwendung in der beschriebenen Membranfilteranlage eigentlich obsolet, da diese durch den gemeinsamen Permeatraum für alle Module ersetzt wird. Falls das Membranmaterial der Rohrmembranen begrenzt mechanisch stabil ist, können bei Lagerung, Montage oder Demontage leicht Beschädigungen auftreten. In diesem Fall bzw. wenn aufgrund der ausschließlichen Verfügbarkeit von Rohrmodulen mit integrierter Druckhülle diese nicht weggelassen werden kann so stellt die Druckhülle zumindest kein Hindernis für den Prozess dar. Je nach Permeat- oder Rückspülmenge kann es sogar sinnvoll sein die Druckhülle der Rohrmembranen gleichsam als Leitwand gegen übermäßigen lokalen Fluss durch die Membran einzusetzen. Überproportionale Permeatentnahme bzw. Rückspülung sind die Folge wenn der Abzug bzw. die Beaufschlagung des Permeatraumes über nur eine Permeatleitung erfolgt und am Eintrittspunkt in den Permeatraum hohe Flüsse und damit verbundene hydraulische Reibungsverluste auftreten.

Jedoch auch der Einsatz von Filtermodulen mit Outside-Inside Filtrationsmodulen (die Membran wird in die zu filtrierende Flüssigkeit eingetaucht und das Permeat aus Hohlfasern oder Taschen abgezogen) ist möglich, sofern diese in Strömungsrohren eingebaut werden können. Weiters müssen Einrichtungen zur gemeinsamen Feed- und Luftanspeisung, sowie ein kommunizierender Permeatraum geschaffen werden.

Die erfindungsgemäße Membranfilteranlage weist folgende Vorteile gegenüber herkömmlichen Anordnungen auf:
- Eine große Anzahl an vertikal stehenden, belüfteten Filtrationsmodulen kann ohne Verstopfungsneigung und den damit verbundenen Betriebsstörungen parallel betrieben werden.
- Die Belüftungseinrichtung zur Vermischung der Feedstromes mit Gasblasen ermöglicht eine gleichmäßige Versorgung einer großen Anzahl an Filtermodulen.
- Störstoffe, die mit der zu filtrierenden Suspension in die Filtration gelangen, können sich je nach hydraulischen Bedingungen und der Konfiguration der Membranfiltrationsmodule entweder direkt ablagern oder durch Akkumulation zu größeren Einheiten zusammenfügen. Speziell Fasern die selbst mit aufwendigen Vorreinigungsverfahren nicht restlos zurückgehalten werden können führen in Filtrationsstufen zu Betriebsstörungen. Ein Abzugsrohr an der tiefsten Stelle der Membranfilteranlage ermöglicht im Fall von solchen Ablagerungen Austrag von eben diesen. Ein irreversibler Verlust von Membranfläche kann vermieden und die gleichmäßige Anströmung aller Membranfiltrationsmodule kann hiermit sichergestellt werden.
- Membranen müssen in unterschiedlichen Intervallen chemisch gereinigt werden. Die effizienteste Reinigung ist hierbei die Beaufschlagung der ganzen Membranfläche, sowohl feed- als auch permeatseitig, mit chemischem Reiniger. Hierfür sollte vorteilhafterweise jedoch die zu filtrierende Flüssigkeit aus der Membranfilteranlage entfernt werden. Mit der hier beschriebenen Erfindung kann sie durch Absperreinrichtungen von dem Vorlagetank mit der zu filtrierenden Suspension getrennt werden. Mittels Entleerungspumpe wird die gesamte Vorrichtung restlos entleert, mit Permeat gespült und anschließend mit dem geeigneten chemischen Reinigungsverfahren gereinigt. Die kompakte Membranfilteranlage hat ein verhältnismäßig geringes feedseitiges und permeatseitiges Volumen wodurch der Verbrauch an chemischem Reiniger gegenüber konventionellen Filtrationsanordnungen reduziert werden kann.
- Die kompakte Membranfilteranlage ermöglicht die Aufstellung selbst bei sehr geringem Platzangebot.
- Die Membranfilteranlage kann sowohl trocken als auch getaucht, in der zu filtrierenden Flüssigkeit aufgestellt werden.
- Die kompakte Membranfilteranlage ist aufgrund ihrer Größe leichter transportabel and kann in einer Werkshalle vormontiert werden - geringere Montage- u. Transportkosten fallen an.
- Die kompakte Anordnung der Membranfilteranlage benötigt weniger Rohr- u. Fittingsmaterial für Feed-, Permeat- und Luftleitungen und ist dadurch auch in den Investkosten günstiger als konventionelle Filtrationsanordnungen.

### Bezugszeichenliste:

1. Permeatleitung
2. Retentatdeckel
3. Retentatraum
4. Stirnfläche Filtermodul
5. Flansch Retentatraum/Membranmodul
6. Retentatleitung
7. Filtermodul
8. Membranmodul
9. Permeatraum
10. Feedleitung
11. Flansch Feedraum/Membranmodul
12. Feedverteilraum
13. Feedraum
14. Feedverteilöffnung
15. Belüftungseinrichtung
16. Abzugseinrichtung
17. Luftpulsleitung

## Patentansprüche

1. Membranfilteranlage bestehend aus zumindest einem Behälter, in welchem mehrere parallel durchströmbare, einzeln aus der Membranfilteranlage entfernbare, belüftete Filtermodule (7) angeordnet sind, wobei ein Filtermodul mehrere gleichartige Membraneinheiten umfasst, der Behälter durch normal zur Durchströmungsrichtung der Filtermodule (7) angeordnete Böden in mehrere Räume unterteilt ist, wobei zumindest ein Raum (13) der mehreren Filtermodulen (7) gemeinsamen Zuführung von zu filternder Suspension, zumindest ein Raum (9) der gemeinsamen Abführung von Permeat und gegebenenfalls zumindest ein Raum (3) der gemeinsamen Abführung von Retentat dient, **dadurch gekennzeichnet, dass** eine Feedpumpe zur Förderung von zu filternder Suspension in den Feedraum (13) sowie im der gemeinsamen Zuführung von zu filternder Suspension dienenden Feedraum (13) eine von der zu reinigenden Suspension umströmbare Belüftereinrichtung (15) angeordnet ist, dass der Feedraum (13) zumindest einen Feedverteilraum (12) besitzt, welcher seitlich zumindest teilweise um den Feedraum geführt ist, und dass die zu filternde Suspension von einer Feedverteilöffnung (14) normal zur Durchströmungsrichtung der Filtermodule in den Feedraum (13) eindringen kann.

2. Anlage nach Anspruch 1, **dadurch gekennzeichnet, dass** im Behälter ein die Filtermodule (7) umgebender Permeatraum (9) vorgesehen ist, der sowohl gegenüber der zu filternden Suspension als auch gegenüber dem Retentat abgeschlossen ist und die Filtermodule so ausgebildet sind, dass das Permeat in den Permeatraum (9) austritt.

3. Anlage nach Anspruch 1 oder 2, **dadurch gekennzeichnet, dass** ein Feedraum (13) ausgebildet ist, der zumindest die einlaufseitigen Stirnflächen aller Filtermodule (7) umspannt und mit den einzelnen Filtermodulen (7) zum Zuleiten von zu filternder Suspension verbunden ist.

4. Anlage nach einem der Ansprüche 1 bis 3, **dadurch gekennzeichnet, dass** ein Retentatraum (3) ausgebildet ist, der zumindest die ablaufseitigen Stirnflächen (4) aller Filtermodule (7) umspannt und mit den einzelnen Filtermodulen (7) zum Ableiten von Retentat verbunden ist.

5. Anlage nach einem der Ansprüche 1 bis 4, **dadurch gekennzeichnet, dass** im Feedverteilraum (12) eine Abzugseinrichtung (16) zur Entleerung der Filtrationseinrichtung bzw. zur Störstoffentfernung vorgesehen ist.

6. Anlage nach einem der Ansprüche 1 bis 5, **dadurch gekennzeichnet, dass** im Feedraum (13) eine Luftpulsleitung (17), mit welcher ein Luftpuls in den Feedraum eingebracht werden kann, angeordnet ist.

7. Verfahren zum Betreiben einer Membranfilteranlage nach einem der Ansprüche 1 bis 6, **dadurch gekennzeichnet, dass** die aufgrund der Begasung erreichte Gewichtsreduktion der Fluidsäule der Suspension im Filtermodul (7) den durch den Reibungsverlust der Strömung verursachten Druckunterschied zwischen Eintritt und Austritt des Membranfiltermoduls kompensiert.

8. Verfahren zur Reinigung der Membranfilteranlage nach einem der Ansprüche 1 bis 6, **dadurch gekennzeichnet, dass** zur Reinigung der Membranfilteranlage in periodischen Zeitabständen Permeat gegen die Produktionsrichtung durch die Membranoberfläche der Filtermodule (7) rückgespült wird.

9. Verfahren nach Anspruch 8, **dadurch gekennzeichnet, dass** zur Reinigung der Membranfilteranlage ein getakteter Luftstoß durch eine Luftpulsleitung (17) in den Feedraum (13) und damit in weiterer Folge in die Filtermodule (7) eingebracht wird.

10. Verfahren nach einem der Ansprüche 8 oder 9, **dadurch gekennzeichnet, dass** die zu filtrierende Suspension aus dem Feedraum (13) der Membranfilteranlage entfernt wird, dass Permeat durch die Filtermodule (7) rückgespült und über die Belüftungseinrichtung (15) belüftet und/oder mit einer oder mehreren chemischen Reinigungslösungen versetzt wird, und
dass das verunreinigte Spülwasser abgepumpt wird.

## Claims

1. A membrane filter system, comprising at least one vessel in which there are arranged a plurality of aerated filter modules (7) through which medium can flow in parallel and which can be removed individually from the membrane filter system, one filter module comprising a plurality of identical membrane units, whereas the vessel is divided into a plurality of spaces by plates arranged normally with respect to the direction of flow through the filter modules (7), at least one space (13) serving for the common supply of suspension that is to be filtered to the plurality of filter modules (1), at least one space (9) for the common discharging of permeate and optionally at least one space (3) for the common discharging of retentate, **characterized in that** a feed pump for supply of suspension that is to be filtered into the feed space (13) is arranged and an aeration device (15) around which the suspension that is to be purified flows is arranged in the feed space (13) serving for the common supply of suspension, and that the feed space (13) has at least one feed distribution space (12) which runs laterally at least partially around the feed space and that the suspension that is to be filtered can penetrate normally with respect to the direction of flow through the filter modules into the feed space (13) from a feed distribution opening (14).

2. The system as claimed in claim 1, **characterized in that** in the vessel there is a permeate space (9) which surrounds the filter modules (7) and is closed off both with respect to the suspension that is to be filtered and with respect to the retentate, and the filter modules are designed in such a way that the permeate emerges into the permeate space (9).

3. The system as claimed in claim 1 or 2, **characterized in that** a feed space (13) is formed, which encloses at least the inlet-side end faces of all the filter modules (7) and is connected to the individual filter modules (7) for the purpose of feeding in suspension that is to be filtered.

4. The system as claimed in one of claims 1 to 3, **characterized in that** a retentate space (3) is formed, which encloses at least the outlet-side end faces (4) of all the filter modules (7) and is connected to the individual filter modules (7) for removing retentate.

5. The system as claimed in one of claims 1 to 4, **characterized in that** a tap-off device (16) for emptying the filtration device and/or removing contaminants is provided in the feed distribution space (12).

6. The system as claimed in one of claims 1 to 5, **characterized in that** an air pulse line (17), which can be used to introduce an air pulse into the feed space, is arranged in the feed space (13).

7. A method for operating the membrane filter system as claimed in one of claims 1 to 6, **characterized in that** the reduction in the weight of the fluid column of the suspension in the filter module (7) which is achieved as a result of the gasification compensates for the pressure difference between the inlet and outlet of the membrane filter module caused by the friction loss of the flow.

8. A method for cleaning the membrane filter system as claimed in one of claims 1 to 6, **characterized in that** permeate is back-flushed through the membrane surface of the filter modules (7), counter to the production direction, at periodic intervals in order to clean the membrane filter system.

9. The method as claimed in claim 8, **characterized in that** a cyclical blast of air is introduced through an air pulse line (17) into the feed space (13) and therefore onward into the filter modules (7) in order to clean the membrane filter system.

10. The method as claimed in either of claims 8 and 9, **characterized in that** the suspension that is to be filtered is removed from the feed space (13) of the membrane filter system, **in that** permeate is back-flushed through the filter modules (7) and is aerated via the aeration device (15) and/or mixed with one or more chemical cleaning solutions, and **in that** the contaminated flushing water is pumped out.

## Revendications

1. Dispositif de filtre à membrane comprenant au moins un récipient, dans lequel sont disposés plusieurs modules de filtre (7) ventilés, pouvant être parcourus individuellement et pouvant être enlevés individuellement du dispositif de filtre à membrane, un module de filtre comprenant plusieurs unités de membrane du même type, le récipient étant subdivisé en plusieurs espaces par des fonds disposés perpendiculairement au sens d'écoulement des modules de filtre (7), au moins un espace (13) servant à l'arrivée commune à plusieurs modules de filtre (7) de la suspension à filtrer, au moins un espace (9) servant à l'évacuation commune du perméat et éventuellement au moins un espace (3) servant à l'évacuation commune du rétentat, **caractérisé en ce qu'**une pompe à suspension pour le transport de la suspension à filtrer dans l'espace à suspension (13), et un dispositif de ventilation (15) autour duquel peut s'écouler la suspension à nettoyer, sont disposés dans l'espace à suspension (13) servant à l'arrivée commune de la suspension à filtrer, **en ce que** l'espace à suspension (13) présente au moins un espace répartiteur de suspension (12) qui est guidé également au moins en partie autour de l'espace à suspension, et **en ce que** la suspension à filtrer peut pénétrer par un orifice répartiteur de suspension (14) perpendiculairement au sens d'écoulement des modules de filtre dans l'espace à suspension (13).

2. Dispositif selon la revendication 1, **caractérisé en ce que** dans le récipient est prévu un espace à perméat (9) entourant les modules de filtre (7), qui est terminé aussi bien par rapport à la suspension à filtrer que par rapport au rétentat et les modules de filtre sont réalisés de telle sorte que le perméat sort dans l'espace à perméat (9).

3. Dispositif selon la revendication 1 ou 2, **caractérisé en ce qu'**un espace à suspension (13) est réalisé, lequel entoure au moins les faces avant côté entrée de tous les modules de filtre (7) et est relié aux modules de filtre (7) individuels pour l'arrivée de la suspension à filtrer.

4. Dispositif selon l'une quelconque des revendications 1 à 3, **caractérisé en ce qu'**un espace à rétentat (3) est réalisé, lequel entoure au moins les faces avant (4) côté écoulement de tous modules de filtre (7) et est relié aux modules de filtre (7) individuels pour l'évacuation du rétentat.

5. Dispositif selon l'une quelconque des revendications 1 à 4, **caractérisé en ce qu'**un dispositif d'évacuation (16) pour le vidage du dispositif de filtration ou pour l'enlèvement des substances parasites est prévu dans l'espace répartiteur de suspension (12).

6. Dispositif selon l'une quelconque des revendications 1 à 5, **caractérisé en ce qu'**une conduite d'impulsion d'air (17), par laquelle une impulsion d'air peut être introduite dans l'espace à suspension, est disposée dans l'espace à suspension (13).

7. Procédé pour exploiter un dispositif de filtre à membrane selon l'une quelconque des revendications 1 à 6, **caractérisé en ce que** la réduction de poids obtenue en raison de la gazéification, de la colonne de fluide de la suspension compense dans le module de filtre (7) la différence de pression causée par la perte de frottement de l'écoulement entre l'entrée et la sortie du module de filtre à membrane.

8. Procédé pour nettoyer le dispositif de filtre à membrane selon l'une quelconque des revendications 1 à 6, **caractérisé en ce que** du perméat est lavé à contre-courant contre le sens de production à travers la surface de membrane des modules de filtre (7) pour nettoyer le dispositif de filtre à membrane à des intervalles périodiques.

9. Procédé selon la revendication 8, **caractérisé en ce qu'**un à-coup d'air cadencé est introduit à travers une conduite d'impulsion d'air (17) dans l'espace à suspension (13) et donc par la suite dans les modules de filtre (7) pour le nettoyage du dispositif de filtre à membrane.

10. Procédé selon l'une quelconque des revendications 8 ou 9, **caractérisé en ce que** la suspension à filtrer est enlevée de l'espace à suspension (13) du dispositif de filtre à membrane, **en ce que** du perméat est lavé à contre-courant à travers les modules de filtre (7) et ventilé par le dispositif de ventilation (15) et/ou est mélangé avec une ou plusieurs solutions de nettoyage chimique, et **en ce que** l'eau de lavage souillée est évacuée par pompage.
